# EUROPEAN PATENT SPECIFICATION

(11) **EP 4 398 610 B1**
(45) Date of publication and mention of the grant of the patent: **29.07.2026**
(21) Application number: 22880107.2
(22) Date of filing: 21.09.2022
(51) Int. Cl.: H04W 4/06, H04W 4/02, H04W 4/08

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 11.10.2021 CN 202111183542
(43) Date of publication of application: 10.07.2024
(73) Proprietor: Huawei Technologies Co., Ltd., Shenzhen, Guangdong 518129 (CN)
(72) Inventor: LI, Meng, Shenzhen, Guangdong 518129 (CN); GE, Cuili, Shenzhen, Guangdong 518129 (CN)
(74) Representative: Epping - Hermann - Fischer
(86) International application number: PCT/CN2022/120102
(87) International publication number: WO 2023/061167

(56) References cited:
- EP-A1- 3 694 234
- WO-A1-2021/162315
- CN-A- 109 699 013
- CN-A- 111 866 757
- US-A1- 2021 168 569
- US-A1- 2021 281 981
- US-A1- 2021 281 981
- NOKIA, NOKIA SHANGHAI BELL: "KI#1 New Solution for broadcast session management", 3GPP DRAFT; S2-2005652, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic meeting; 20200819 - 20200901, 13 August 2020 (2020-08-13), Mobile Competence Centre ; 650, route des Lucioles ; F-06921 Sophia-Antipolis Cedex ; France , XP051920464
- NOKIA; NOKIA SHANGHAI BELL: "KI#1: Conclusion update for MBS Session activation/deactivation and UE join/leave", 3GPP DRAFT; S2-2101017, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic meeting; 20200224 - 20200309, 1 January 2020 (2020-01-01), Mobile Competence Centre ; 650, route des Lucioles ; F-06921 Sophia-Antipolis Cedex ; France, pages 1 - 23, XP055944136

## Description

This disclosure claims priority to Chinese Patent Application No. 202111183542.3, filed with the China National Intellectual Property Administration on October 11, 2021 and entitled "COMMUNICATION METHOD AND APPARATUS".

### TECHNICAL FIELD

Embodiments of this disclosure relate to the communication field, and more specifically, to a communication method and apparatus.

### BACKGROUND

In wireless communication, before a broadcast service is started, a base station broadcasts, through an air interface via a system information block (System Information Block, SIB), a correspondence that is between a multicast/broadcast service and a frequency and that may be subsequently sent in a cell. In this way, a terminal device selects a frequency of the multicast and broadcast sevice to receive broadcast data. In this case, the multicast/broadcast service sent via the SIB may be a multicast/broadcast service that has been allocated with a resource in a core network, or may be a multicast/broadcast service that is allocated with only a multicast/broadcast service identifier, for example, a temporary mobile group identity (temporary mobile group identity, TMGI).

In multicast and broadcast of a 4th generation (4th generation, 4G) system, a service area identifier (Service Area Identifier, SAI) is defined. The base station broadcasts a correspondence between the SAI and the frequency via the SIB, and a correspondence between the TMGI and the SAI is configured on a terminal device side. In this way, the terminal device may obtain a correspondence between the TMGI and the frequency by reading a SIB message. In addition, an application scenario of the multicast and broadcast of the 4G system is mainly a public safety scenario. Therefore, it may be assumed that an application server (application server, AS) has high permission, and the AS may learn of network topology information. In other words, the AS may learn of the correspondence between the TMGI and the SAI.

Currently, in multicast and broadcast of a 5th generation (5th generation, 5G) system, only a TMGI is defined. If no optimization is performed on a network side, excessive TMGIs are sent in a SIB message, and waste of system broadcast resources is caused consequently. In addition, for the multicast and broadcast of the 5G system, even if an SAI is defined, because an application scenario of the multicast and broadcast of the 5G system is wide, it cannot be assumed that an AS has high permission, and the AS cannot learn of network topology information. In other words, the AS cannot learn of the correspondence between the TMGI and the SAI. Therefore, for the multicast and broadcast of the 5G system, how to obtain, when the AS does not learn of the network topology information, a SAI corresponding to a multicast/broadcast service is an urgent problem to be resolved.

US 2021/281981 A1 discloses a communications method, apparatus and system for performing the method. According to the communications method, after receiving information about a multicast area from a sender of a multicast service, a first core network device in a first network obtains, based on the information, indication information indicates that the first network cannot support the multicast service in the multicast area, or indicates that the first network supports the multicast service in a portion of areas of the multicast area, and sends the indication information to the sender. In this way, the sender of the multicast service can determine whether the first network supports the multicast service in the multicast area.

EP 3 694 234 A1 discloses a communications system, a communication method, and an apparatus thereof, wherein communications system shall achieve separation of a multicast service control function from a multicast transmission management function. The communications system includes a multicast session management network element, an access and mobility management network element and a user plane function network element. The multicast session management network element sends a first multicast session request to the access and mobility management network element, where the first multicast session request carries a multicast session context. The first multicast session request is used to request to establish a multicast session based on the multicast session context and sends a second multicast session request to the user plane function network element, where the second multicast session request carries user plane forwarding-related information used to indicate a user plane forwarding rule of the multicast session. The access and mobility management network element receives the first multicast session request and sends the first multicast session request to an access network node. The user plane function network element receives the second multicast session request, and sets, based on the user plane forwarding-related information, the user plane forwarding rule of the multicast session.

### SUMMARY

Embodiments of this disclosure provide a communication method and apparatus, so that a SAI corresponding to a multicast/broadcast service can be obtained when an AS does not learn of network topology information. This helps reduce waste of system broadcast resources.

The present invention is set out by the set of appended claims. In the following, parts of the description and drawing referring to examples or implementations, which are not covered by the claims are not presented as embodiments of the invention, but as illustrative examples useful for understanding the invention. The embodiments of the present disclosure are provided by the set of appended claims.

According to a first aspect, in one embodiment, a communication method is provided. The communication method may be performed by a multicast session management network element, or by a component (such as a circuit, a chip, or a chip system) configured in the multicast session management network element.

The communication method includes: receiving first information of a first multicast service from an application server, where the first information indicates at least one of the following: a first service area of the first multicast service, a type of the first multicast service, or the first multicast service; and sending a second service area identifier of the first multicast service to the application server based on the first information.

In the foregoing technical solution, the multicast session management network element sends the second service area identifier of the first multicast service to the application server based on the first information sent by the application server. In this way, the application server may obtain the second service area identifier of the first multicast service, namely, a SAI of the first multicast service, when the application server does not learn of network topology information.

With reference to the first aspect, that the multicast session management network element sends a second service area identifier of the first multicast service to the application server based on the first information includes: The multicast session management network element determines the second service area identifier of the first multicast service corresponding to the first information. The multicast session management network element sends the second service area identifier of the first multicast service to the application server.

With reference to the first aspect, in some implementations of the first aspect, the communication method further includes: The multicast session management network element sends second information of the first multicast service to the application server, where the second information includes at least one of the following: a frequency of the first multicast service or a temporary multicast group identifier of the first multicast service.

When the second information includes the temporary multicast group identifier of the first multicast service, a scenario in which the application server requests a plurality of temporary mobile group identities may be supported.

When the second information includes the frequency of the first multicast service, a frequency corresponding to the second service area identifier of the first multicast service on a network side may be further obtained. In this way, the frequency corresponding to the second service area identifier of the first multicast service may be further provided for a terminal device, so that the terminal device can directly obtain a corresponding parameter, for example, scheduling information, of multicast based on the frequency corresponding to the second service area identifier of the first multicast service. A step in which the terminal device first reads, from a network device, the frequency corresponding to the second service area identifier of the first multicast service is saved, in other words, power consumption and signaling overheads of the terminal device are reduced.

In an implementation, that the multicast session management network element sends second information of the first multicast service to the application server includes: The multicast session management network element determines the second information that is of the first multicast service and that corresponds to the first information of the first multicast service. The multicast session management network element sends the second information of the first multicast service to the application server.

In another implementation, that the multicast session management network element sends second information of the first multicast service to the application server includes: The multicast session management network element determines the second information that is of the first multicast service and that corresponds to the second service area identifier of the first multicast service. The multicast session management network element sends the second information of the first multicast service to the application server.

With reference to the first aspect, in some implementations of the first aspect, the first information is carried in a temporary multicast group identifier allocation request message.

The first information is carried in an existing temporary multicast group identifier allocation request message. To be specific, in a process in which the application server requests allocation of the temporary multicast group identifier, allocation of the second service area identifier of the first multicast service is requested. In this way, an existing procedure of requesting allocation of the temporary multicast group identifier may be reused, a change to an existing protocol is reduced, a processing speed is accelerated, and interaction between network elements does not need to be performed again.

With reference to the first aspect, in some implementations of the first aspect, the second service area identifier of the first multicast service is carried in a response message of the temporary multicast group identifier allocation request message.

The second service area identifier of the first multicast service is carried in a response message of the existing temporary multicast group identifier allocation request message. To be specific, in a process in which the multicast session management network element requests allocation of the temporary multicast group identifier, the second service area identifier of the first multicast service is carried in the response message of the temporary multicast group identifier allocation request message and sent to the application server. In this way, an existing procedure of requesting allocation of the temporary multicast group identifier may be reused, a change to an existing protocol is reduced, a processing speed is accelerated, and interaction between network elements does not need to be performed again.

With reference to the first aspect, in some implementations of the first aspect, the second information of the first multicast service is carried in the response message of the temporary multicast group identifier allocation request message.

The second information of the first multicast service is carried in the response message of the existing temporary multicast group identifier allocation request message. To be specific, in a process in which the multicast session management network element requests allocation of the temporary multicast group identifier, the second information of the first multicast service is carried in the response message of the temporary multicast group identifier allocation request message and sent to the application server. In this way, an existing procedure of requesting allocation of the temporary multicast group identifier may be reused, a change to an existing protocol is reduced, a processing speed is accelerated, and interaction between network elements does not need to be performed again.

With reference to the first aspect, the communication method further includes: The multicast session management network element receives a session creation request message from the application server. The multicast session management network element notifies a first network device of the second service area identifier of the first multicast service based on the session creation request message.

Optionally, the session creation request message may carry the second service area identifier of the first multicast service and/or the second information of the first multicast service. In this way, when the multicast session management network element does not store the second service area identifier of the first multicast service and/or the second information of the first multicast service, the multicast session management network element may obtain the second service area identifier of the first multicast service and/or the second information of the first multicast service. In this way, the second service area identifier of the first multicast service and/or the second information of the first multicast service are/is provided for a corresponding network device, and the corresponding network device, namely, a first network device, may be dynamically controlled to broadcast the second service area identifier of the first multicast service. In addition, the first network device does not broadcast excessive TMGIs, so that waste of system broadcast resources is avoided.

With reference to the first aspect, in some implementations of the first aspect, that the multicast session management network element notifies a first network device of the second service area identifier of the first multicast service based on the session creation request message includes: The multicast session management network element determines the first network device based on the session creation request message. The multicast session management network element notifies the first network device of the second service area identifier of the first multicast service.

With reference to the first aspect, in some implementations of the first aspect, the communication method further includes: The multicast session management network element notifies the first network device of the second information of the first multicast service.

According to a second aspect, in another embodiment, a communication method is provided. The communication method is performed by an application server, or by a component (such as a circuit, a chip, or a chip system) configured in the application server.

The communication method includes: sending first information of a first multicast service to a multicast session management network element, where the first information includes at least one of the following: a first service area of the first multicast service, a type of the first multicast service, or the first multicast service; receiving a second service area identifier of the first multicast service from the multicast session management network element; and notifying a terminal device of the second service area identifier of the first multicast service.

In the foregoing technical solution, the application server sends the first information to the multicast session management network element, and requests the second service area identifier of the first multicast service, to obtain the second service area identifier of the first multicast service from the multicast session management network element. In this way, the application server may obtain the second service area identifier of the first multicast service, namely, a SAI of the first multicast service, when the application server does not learn of network topology information.

With reference to the second aspect, in some implementations of the second aspect, the communication method further includes: The application server receives second information of the first multicast service from the multicast session management network element, where the second information includes at least one of the following: a frequency of the first multicast service or a temporary multicast group identifier of the first multicast service.

With reference to the second aspect, in some implementations of the second aspect, the first information is carried in a temporary multicast group identifier allocation request message.

With reference to the second aspect, in some implementations of the second aspect, the second service area identifier of the first multicast service is carried in a response message of the temporary multicast group identifier allocation request message.

With reference to the second aspect, in some implementations of the second aspect, that the application server notifies a terminal device of the second service area identifier of the first multicast service includes: The application server notifies the terminal device of the second service area identifier that is of the first multicast service and that is carried in a service announcement message.

The second service area identifier of the first multicast service is carried in an existing service announcement message. In this way, an existing procedure of requesting allocation of the temporary multicast group identifier may be reused, a change to an existing protocol is reduced, a processing speed is accelerated, and interaction between network elements does not need to be performed again.

With reference to the second aspect, in some implementations of the second aspect, the communication method further includes: The application server notifies the terminal device of the second information of the first multicast service.

With reference to the second aspect, in some implementations of the second aspect, that the application server notifies a terminal device of the second information of the first multicast service includes: The application server notifies the terminal device of the second information that is of the first multicast service and that is carried in the service announcement message.

The second information of the first multicast service is carried in the existing service announcement message. In this way, an existing procedure of requesting allocation of the temporary multicast group identifier may be reused, a change to an existing protocol is reduced, a processing speed is accelerated, and interaction between network elements does not need to be performed again.

According to a third aspect, in another embodiment, a communication method is provided. The communication method is performed by a network element of a network device, or by a component (such as a circuit, a chip, or a chip system) configured in the network device.

The communication method includes: receiving a second service area identifier of a first multicast service; and broadcasting the second service area identifier of the first multicast service.

The network device may dynamically broadcast the second service area identifier of the first multicast service based on the received second service area identifier of the first multicast service. In this way, the network device does not broadcast excessive TMGIs, so that waste of system broadcast resources is avoided.

With reference to the third aspect, in some implementations of the third aspect, the communication method further includes: The network device receives second information of the first multicast service and/or a first service area of the first multicast service. The network device broadcasts the second information of the first multicast service and/or the first service area of the first multicast service, where the second information includes at least one of the following: a frequency of the first multicast service or a temporary multicast group identifier of the first multicast service.

According to a fourth aspect, a communication apparatus is provided. The apparatus is configured to perform the communication method in any possible implementation of the first aspect. Specifically, the apparatus may include a unit and/or a module, for example, a processing unit and/or a communication unit, configured to perform the communication method provided in the first aspect or any implementation of the first aspect.

In an implementation, the apparatus is a multicast session management network element. When the apparatus is the multicast session management network element, the communication unit may be a transceiver or an input/output interface. The processing unit may be at least one processor. Optionally, the transceiver may be a transceiver circuit. Optionally, the input/output interface may be an input/output circuit.

In another implementation, the apparatus is a chip, a chip system, or a circuit configured in a multicast session management network element. When the apparatus is the chip, the chip system, or the circuit configured in the multicast session management network element, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a fifth aspect, a communication apparatus is provided. The apparatus is configured to perform the communication method in any possible implementation of the second aspect. Specifically, the apparatus may include a unit and/or a module, for example, a processing unit and/or a communication unit, configured to perform the communication method provided in the second aspect or any implementation of the second aspect.

In an implementation, the apparatus is an application server. When the apparatus is the application server, the communication unit may be a transceiver or an input/output interface. The processing unit may be at least one processor. Optionally, the transceiver may be a transceiver circuit. Optionally, the input/output interface may be an input/output circuit.

In another implementation, the apparatus is a chip, a chip system, or a circuit configured in an application server. When the apparatus is the chip, the chip system, or the circuit configured in the application server, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a sixth aspect, a communication apparatus is provided. The apparatus is configured to perform the communication method in any possible implementation of the third aspect. Specifically, the apparatus may include a unit and/or a module configured to perform the communication method, for example, a processing unit and/or a communication unit, provided in the third aspect or any implementation of the third aspect.

In an implementation, the apparatus is a network device. When the apparatus is the network device, the communication unit may be a transceiver or an input/output interface. The processing unit may be at least one processor. Optionally, the transceiver may be a transceiver circuit. Optionally, the input/output interface may be an input/output circuit.

In another implementation, the apparatus is a chip, a chip system, or a circuit configured in a network device. When the apparatus is the chip, the chip system, or the circuit configured in the network device, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a seventh aspect, a communication apparatus is provided. The apparatus includes: a memory, configured to store a program; and at least one processor, configured to execute a computer program or instructions stored in the memory, to perform the communication method in the first aspect or any implementation of the first aspect.

In an implementation, the apparatus is a multicast session management network element.

In another implementation, the apparatus is a chip, a chip system, or a circuit configured in a multicast session management network element.

According to an eighth aspect, a communication apparatus is provided. The apparatus includes: a memory, configured to store a program; and at least one processor, configured to execute a computer program or instructions stored in the memory, to perform the communication method in the second aspect or any implementation of the second aspect.

In an implementation, the apparatus is an application server.

In another implementation, the apparatus is a chip, a chip system, or a circuit configured in an application server.

According to a ninth aspect, a communication apparatus is provided. The apparatus includes: a memory, configured to store a program; and at least one processor, configured to execute a computer program or instructions stored in the memory, to perform the communication method in the third aspect or any implementation of the third aspect.

In an implementation, the apparatus is a network device.

In another implementation, the apparatus is a chip, a chip system, or a circuit configured in a network device.

According to a tenth aspect, a processor is provided. The processor is configured to perform the communication method according to any possible implementation of the first aspect to the third aspect.

Operations such as sending and obtaining/receiving related to the processor may be understood as operations such as outputting and receiving or inputting performed by the processor unless otherwise specified or if the operations does not conflict with an actual function or internal logic of the operations in a related description, or may be understood as operations of sending and receiving performed by a radio frequency circuit and an antenna. This is not limited in this disclosure.

According to an eleventh aspect, a computer program product is provided. The computer program product includes a computer program (which may also be referred to as code or instructions). When the computer program is run, a computer is enabled to perform the communication method according to any possible implementation of the first aspect to the third aspect.

According to a twelfth aspect, a computer-readable storage medium is provided. The computer-readable storage medium stores a computer program (which may also be referred to as code or instructions). When the computer program is run on a computer, the computer is enabled to perform the communication method according to any possible implementation of the first aspect to the third aspect.

According to a thirteenth aspect, a chip is provided and includes a processor and a communication interface. The processor reads, through the communication interface, instructions stored in a memory, to perform the communication method according to any possible implementation of the first aspect to the third aspect.

Optionally, in an implementation, the chip further includes the memory. The memory stores a computer program or instructions, and the processor is configured to execute the computer program or the instructions stored in the memory. When the computer program or the instructions are executed, the processor is configured to perform the communication method according to any possible implementation of the first aspect to the third aspect.

According to a fourteenth aspect, a communication system is provided and includes the multicast session management network element, the application server, and/or the first network device described above. The multicast session management network element is configured to perform the communication method according to any possible implementation of the first aspect; the application server is configured to perform the communication method according to any possible implementation of the second aspect; or the first network device is configured to perform the communication method according to any possible implementation of the third aspect.

### BRIEF DESCRIPTION OF DRAWINGS

FIG. 1 is a diagram of an architecture of a communication system;
FIG. 2 is a schematic flowchart of a communication method according to an example of this disclosure;
FIG. 3 is a schematic flowchart of another communication method according to an example of this disclosure;
FIG. 4 is a schematic block diagram of a communication apparatus according to an example of this disclosure;
FIG. 5 is a schematic block diagram of another communication apparatus according to an example of this disclosure; and
FIG. 6 is a schematic diagram of a communication system according to an example of this disclosure.

### DETAILED DESCRIPTION

The following describes technical solutions of examples in this disclosure with reference to accompanying drawings.

The technical solutions of examples of this disclosure may be applied to various communication systems, such as a global system for mobile communication (Global System for Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a future 5G system, or a new radio (New Radio, NR) system.

The technical solutions provided in this disclosure may be further applied to a future communication system, for example, a sixth generation mobile communication system. This is not limited in this disclosure.

The technical solutions provided in this disclosure may be further applied to machine type communication (machine type communication, MTC), long term evolution-machine (long term evolution-machine, LTE-M), a device to device (device to device, D2D) network, a machine to machine (machine to machine, M2M) network, an internet of things (internet of things, IoT) network, or another network. The IoT network may include, for example, internet of vehicles. Communication manners in an internet of vehicles system are collectively referred to as vehicle to X (vehicle to X, V2X, where X may represent anything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

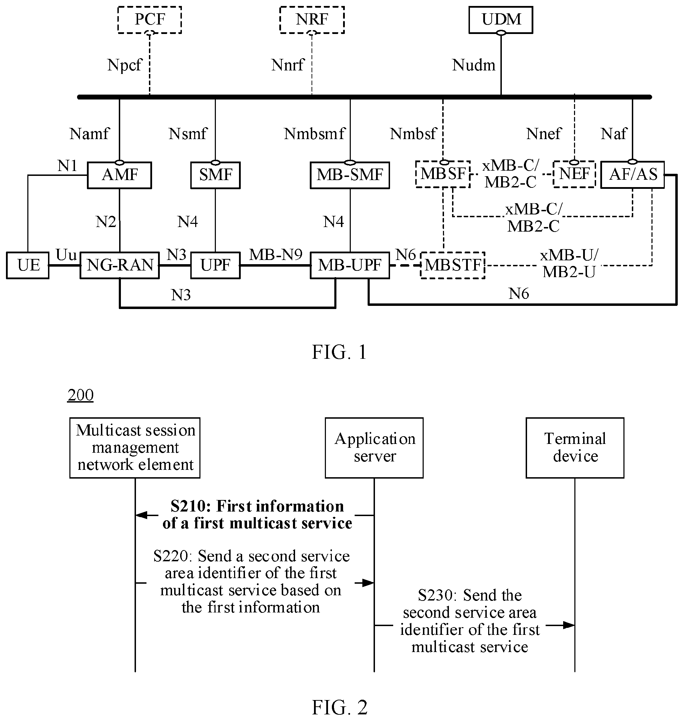

FIG. 1 is a schematic diagram of an architecture of a communication system applicable to an example of this disclosure. As shown in FIG. 1, the architecture is, for example, a 5G system (the 5th generation system, 5GS) defined in the 3rd generation partnership project (3rd Generation Partnership Project, 3GPP) protocol TS23.501. The architecture may be divided into two parts: an access network (access network, AN) and a core network (core network, CN). The access network may be configured to implement a function related to radio access. The core network mainly includes the following several key logical network elements: an access and mobility management function (access and mobility management function, AMF), a session management function (session management function, SMF), a user plane function (user plane function, UPF), a policy control function (policy control function, PCF), a unified data management (unified data management, UDM), and the like.

The following briefly describes network elements shown in FIG. 1.
1. User equipment (user equipment, UE): The user equipment may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device having a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile network (public land mobile network, PLMN). This is not limited in examples of this disclosure.

By way of example but not limitation, in examples of this disclosure, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on the body or integrated into clothes or an accessory of a user. The wearable device is not only a hardware device, but also implements a powerful function through software support, data exchange, and cloud interaction. In a broad sense, the wearable intelligent device includes a full-function and large-size device that can implement complete or partial functions without depending on a smartphone, for example, a smart watch or smart glasses, and a device that focuses on only a specific type of application function and needs to be used with another device such as a smartphone, for example, various smart bands and smart jewelry that perform physical sign monitoring.

In addition, in examples of this disclosure, the terminal device may alternatively be a terminal device in an internet of things (internet of things, IoT) system. An IoT is an important part of the development of future information technologies. A main technical feature of the IoT is to connect a thing to a network via a communication technology, to implement an intelligent network for interconnection between a person and a machine or between things.

2. Access network: The access network provides a network access function for user equipment, and can use transmission tunnels of different quality based on a user level, a requirement for a service, and the like. The access network may be an access network using different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements a network access function based on a wireless communication technology may be referred to as a radio access network (radio access network, RAN). In a 5G communication system, the RAN may also be referred to as a next generation radio access network (next generation radio access network, NG-RAN). The radio access network can manage radio resources, provide an access service for a terminal device, and further complete forwarding of a control signal and user data between the terminal and a core network.

The radio access network may include but is not limited to: a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an AP, a radio relay node, a radio backhaul node, a transmission point (transmission point, TP), a transmission reception point (transmission reception point, TRP), or the like in a Wi-Fi system, or may be a gNB or a transmission point (TRP or TP) in the 5G (for example, NR) system or one antenna panel or one group of antenna panels (including a plurality of antenna panels) of a base station in the 5G system, or may be a network node constituting a gNB or a transmission point, for example, a baseband unit (BBU), a distributed unit (distributed unit, DU), or a base station in a next generation communication 6G system. A specific technology and a specific device form used by a radio access network device are not limited in examples of this disclosure.

The access network may provide a service for a cell. The terminal device may communicate with the cell through a transmission resource (for example, a frequency domain resource or a spectrum resource) allocated by the access network device.

In addition, in examples of this disclosure, the access network device may be further configured to: receive MBS data (MBS data) through a shared N3 interface, and transmit the MBS data to the terminal device in a transmission manner of point to point (point to point, PTP) or point to multipoint (point to multipoint, PTM); or manage a QoS flow of an MBS session through an N2 interface.

3. AMF: The AMF is mainly used for mobility management and access management, such as user location update, user network registration, and user switching. The AMF may be further configured to implement a function other than session management in a mobility management entity (mobility management entity, MME), for example, a function of lawful interception or access authorization (or authentication).

In examples of this disclosure, the AMF may further perform the following functions: performing signaling exchange with the access network device and a multicast/broadcast session management function (multicast/broadcast SMF, MB-SMF) for MBS session management; selecting the access network device for broadcasting; and the like.

4. SMF: The SMF is mainly used for the session management, internet protocol (Internet Protocol, IP) address assignment and management of the UE, manageable user plane function selection, policy control or charging function interface termination, downlink data notification, and the like.

5. MB-SMF: The MB-SMF is a session management function network element having an MBS function. The MB-SMF may be used for MBS session management (including QoS control) and MBS transmission control, including configuring a data plane gateway MB-UPF and a RAN node (via an AMF) for MBS flow transmission according to a policy rule of an MBS from a PCF or a local MBS. The MB-SMF may alternatively be connected to a server of the MBS, a multicast/broadcast service function (multicast/broadcast service function, MBSF) network element, or a network exposure function (network exposure function, NEF), to receive information (for example, target information) related to the MBS. In addition, the MB-SMF may alternatively be connected to the PCF, to create a resource for the MBS. The MB-SMF may be integrated into the PCF or an SMF as a functional module, or may be independently deployed. This is not limited in this disclosure.

In examples of this disclosure, the MB-SMF may further perform the following function: selecting the AMF.

6. UPF: The UPF is a data plane gateway. The UPF may be used for packet routing and forwarding, quality of service (quality of service, QoS) processing of user plane data, and the like. User data may be accessed to a data network (data network, DN) through such a network element.

7. Multicast/broadcast user plane function (multicast/broadcast UPF, MB-UPF): The multicast/broadcast data plane gateway is configured to transmit a QoS flow of an MBS to a RAN. The MB-UPF supports the following functions of the MBS: filtering a downlink packet of an MBS flow; distributing an MBS packet to a RAN node (or a UPF); and QoS enhancing and counting/reporting according to an existing method. The MB-UPF may be integrated into the UPF as a functional module, or may be independently deployed. This is not limited in this disclosure.

8. Multicast/broadcast service function (multicast/broadcast service function, MBSF): The multicast/broadcast service function includes a related management function at a multicast/broadcast service layer. A function that is supported by the MBSF and that is related to an MBS includes: exchanging related information at a service layer with an NEF, an MB-SMF, and a multicast/broadcast service transport function (multicast/broadcast service transport function, MBSTF); performing a coding-related management function on downlink multicast/broadcast service data; filtering and modifying a parameter provided by an application function (application function, AF) for a control plane; and determining a data transmission manner (for example, unicast transmission or broadcast transmission).

9. MBSTF: The MBSTF includes a related data transmission function at a multicast/broadcast service layer. A function that is supported by the MBSTF and that is related to an MBS includes: interacting with an MBSF to obtain control information of multicast/broadcast data transmission; performing encoding on downlink multicast/broadcast service data based on a configuration of the MBSF; distributing multicast and broadcast data received from an AF, and transmitting the multicast and broadcast data to an MB-SMF or a UPF; and the like.

10. NEF: The NEF is configured to securely expose, to the outside, a service, a capability, and the like that are provided by a 3GPP network function.

11. AF: The AF is responsible for providing a service for a 3GPP network, for example, affecting service routing or interacting with a PCF to perform policy control.

In examples of this disclosure, the AF may also be referred to as an AS.

12. Policy control function (PCF): The policy control function is configured to: guide a unified policy framework of a network behavior, provide policy rule information for a control plane function network element (for example, an AMF or an SMF), and the like.

13. Network repository function (network function (NF) repository function, NRF): The network repository function is configured to: store description information of a network functional entity and description information of a service provided by the network functional entity, and support a service discovery, a network element entity discovery, and the like.

14. Unified data management (UDM): The unified data management is used for storing user data, such as subscription information and authentication/authorization information.

In the architecture shown in FIG. 1, the network elements may communicate with each other through an interface shown in the figure. As shown in FIG. 1, an N1 interface is a reference point between the terminal device and the AMF. An N2 interface is a reference point between the NG-RAN and the AMF, and is used for sending a non-access stratum (non-access stratum, NAS) message and the like. An N3 interface is a reference point between the NG-RAN and the UPF, and is used for transmission of user plane data and the like. The N3 interface is further a reference point between the NG-RAN and the MB-UPF, and is used for transmission of the user plane data and the like. An N4 interface is a reference point between the SMF and the UPF, and is used for transmission of information such as tunnel identification information of an N3 connection, data buffer indication information, and a downlink data notification message. An N6 interface is a reference point between the MB-UPF and the DN, and is used for transmission of the user plane data and the like.

In addition, an N11mb interface (which is not shown in FIG. 1) is a reference point between the AMF and the MB-SMF, and is used for an exchange of a session parameter related to multicast and broadcast between the AMF and the MB-SMF, for example, information about updating a QoS and an area, and indication information of activating/deactivating a multicast session. After receiving a parameter of the MB-SMF, the AMF may transmit the parameter to a corresponding base station side. An N33 interface is a reference point between the AF/AS and the NEF, and is used by the AF/AS to provide the NEF with a parameter related to the multicast and broadcast, for example, a service area and a multicast/broadcast service requirement. An Nmb 10 interface (which is not shown in FIG. 1) is a reference point between the AF/AS and the MBSF, and is used by the AF/AS to provide the MBSF with the parameter related to the multicast and broadcast, for example, the service area, the multicast/broadcast service requirement, and coding information. An Nmb 13 interface (which is not shown in FIG. 1) is a reference point between the AF/AS and the MB-SMF, and is used by the AF/AS to provide the MB-SMF with the parameter related to the multicast and broadcast, for example, the service area and the multicast/broadcast service requirement. An N29mb interface (which is not shown in FIG. 1) is a reference point between the NEF and the MB-SMF, and is used by the NEF to provide the MB-SMF with a parameter sent by an AF side. Optionally, the NEF may properly process the parameter of the AF (for example, translate geographic location information into a cell identifier or a tracking area identifier) and send a processed parameter to the MB-SMF. An Nmb1 interface (which is not shown in FIG. 1) is a reference point between the MBSF and the MB-SMF, and is used for an exchange of service information between the MBSF and the MB-SMF, for example, an indication of a start/an end of multicast/broadcast session transmission.

A relationship between another interface and network elements is shown in FIG. 1. For brevity, details are not described herein one by one.

Npcf, Nnrf, Nudm, Namf, Nsmf, Nmbsmf, Nnef, Naf, xmb-C/MB2-C, xmb-U/MB2-U, N1, N2, N3, N4, N6, MB-N9, and Uu in FIG. 1, and N11mb, Nmb10, Nmb13, N29mb and Nmb1 that are not shown in FIG. 1 are interface serial numbers. For meanings of the interface serial numbers, refer to meanings defined in the 3rd generation partnership project (3rd generation partnership project, 3GPP) standard agreement. This is not limited herein.

It should be noted that names of the network elements and the communication interfaces between the network elements in FIG. 1 are briefly described by using an example specified in a current protocol. However, this does not mean that examples of this disclosure can be applied only to a currently known communication system. Therefore, a standard name that appears when a current protocol is used as an example for description is a functional description. A specific name of a network element, an interface, signaling, or the like is not limited in this disclosure, and only indicates a function of the network element, the interface, or the signaling, and may be correspondingly extended to another system, such as a 2G, 3G, 4G, or future communication system.

An architecture to which examples of this disclosure shown in FIG. 1 are applicable is merely an example for description. The architecture to which examples of this disclosure are applicable is not limited thereto. Any architecture that can implement functions of the foregoing network elements is applicable to examples of this disclosure.

It should be further understood that the AMF, the SMF, the UPF, the MB-UPF, the MB-SMF, the MBSF, the MBSTF, the NEF, the PCF, the NRF, and the UDM that are shown in FIG. 1 may be understood as network elements that are configured to implement different functions and that are in the core network, for example, may be combined into a network slice as needed. The core network elements may be independent devices, or may be integrated into a same device to implement different functions. A specific form of the foregoing network elements is not limited in this disclosure.

It should be further understood that the foregoing names are defined merely for ease of distinguishing between different functions, and should not constitute any limitation on this disclosure. This disclosure does not exclude a possibility that another name is used in the 5G network and another future network. For example, in a 6G network, a part or all of the foregoing network elements may still use terms in 5G, or may use another name or the like. Names of interfaces between the network elements in FIG. 1 are merely examples. In a specific implementation, the name of the interface may be another name. This is not specifically limited in this disclosure. In addition, a name of a message (or signaling) transmitted between the foregoing network elements is merely an example, and constitutes no limitation on a function of the message.

For ease of understanding of examples of this disclosure, terms involved in this disclosure are first briefly described.
1. Multicast: A same service and same specific content data are simultaneously provided for a group of dedicated UE (in other words, not all UE in multicast coverage is authorized to receive data).
2. Broadcast: Same specific content data is provided for all UE in a geographic area (in other words, all UE in a broadcast coverage area is authorized to receive data). Multicast may also be referred to as groupcast.
3. Multicast/broadcast session (MBS session): One multicast/broadcast session may provide a service for one multicast/broadcast service. The multicast/broadcast session includes a unicast or groupcast tunnel from a data network to a core network device and then to an access network device, and a unicast or multicast/broadcast air interface resource allocated by the access network device for sending the multicast/broadcast service.

It should be noted that examples of this disclosure may be applicable to both multicast and broadcast. For ease of description, the following uses the multicast as an example for description. The following describes technical solutions provided in this disclosure.

In examples of this disclosure, "represent" may include direct representation and indirect representation, or may include explicit representation and implicit representation. Information represented by one piece of information (for example, first information described below) is referred to as to-be-represented information. In a specific implementation process, the to-be-represented information is represented in a plurality of manners. For example, but no limitation, the to-be-represented information may be directly represented, for example, by the to-be-represented information or an index/identifier of the to-be-represented information. Alternatively, the to-be-represented information may be indirectly represented by indicating another information, and there is an association relationship between the another information and the to-be-represented information. Alternatively, only one part of the to-be-represented information may be indicated, and the other part of the to-be-represented information is known or agreed on in advance. For example, specific information may alternatively be indicated by using an arrangement sequence of information that is agreed on in advance (for example, stipulated in a protocol), to reduce indication overheads to some extent.

It may be understood that the term "and/or" in this specification describes only an association relationship between associated objects, and represents that three relationships may exist. For example, A and/or B may represent the following three cases: Only A exists, both A and B exist, and only B exists. In addition, the character "/" in this specification generally indicates an "or" relationship between the associated objects.

In examples of this disclosure, descriptions such as "when...", "in a case of...", and "if" all mean that a device (for example, a multicast session management network element or a first access and mobility management function network element) performs corresponding processing in an objective situation, and are not intended to limit time, and the device (for example, the multicast session management network element or the first access and mobility management function network element) is not required to perform a determining action during implementation; and do not mean any other limitation.

In examples of this disclosure, "first", "second", and various numerical numbers are merely used for distinguishing for ease of description, and are not intended to limit the scope of examples of this disclosure, for example, distinguishing between different service areas.

In examples of this disclosure, an application server includes two functional modules: an AS and an application function (application function, AF).

The AS may be understood as a data plane entity, and the AS sends multicast/broadcast data corresponding to a target service (for example, a first multicast service described below) to an operator network (a PLMN network).

Alternatively, the AF may be understood as a control plane entity, and may specifically include the following functions:
(1) sending a configuration parameter corresponding to the target service to the operator network,
   for example, sending a service requirement parameter corresponding to the target service to the operator network, for example, priority information, bandwidth information, delay information, or a standardized QoS identifier;
(2) sending a control parameter corresponding to the target service to the operator network,
   for example, sending an activation/deactivation request corresponding to the target service to the operator network; and
(3) obtaining, from the operator network, a parameter corresponding to the target service, such as a TMGI, a SAI, and a frequency.

In general, the application server is configured to: configure or obtain a parameter of the target service in the operator network, send control information of the target service to the operator network, and send data of the target service to the operator network.

The foregoing briefly describes terms involved in this disclosure, and details are not described in the following examples again. The following describes in detail a communication method provided in examples of this disclosure with reference to the accompanying drawings. Examples provided in this disclosure may be applied to the architecture shown in FIG. 1. This is not limited.

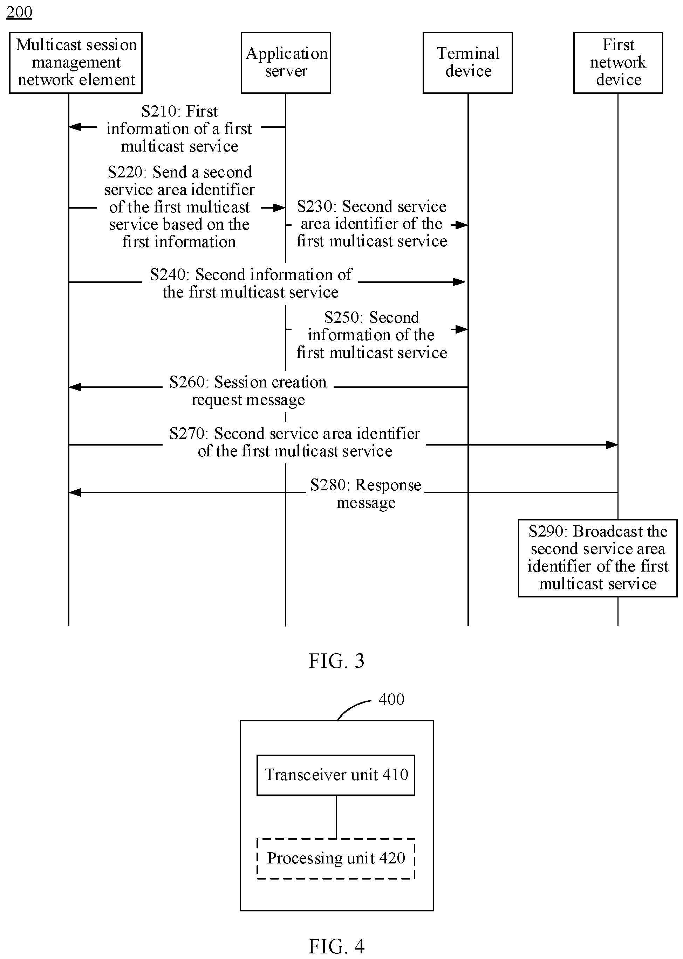

FIG. 2 and FIG. 3 are schematic flowcharts of a communication method 200 according to an example of this disclosure.

As shown in FIG. 2, the communication method 200 includes S210 to S230. The following describes in detail steps included in the communication method 200.

S210: An application server sends first information of a first multicast service to a multicast session management network element.

Correspondingly, the multicast session management network element receives the first information of the first multicast service from the application server.

For example, the first multicast service may be a map update service, a public safety service, an emergency communication service, a video transmission service (for example, an emergency video communication (mission critical video) service or an emergency voice communication (mission critical push-to-talk) service), an IoT software upgrade service, or the like.

The first information is used for requesting a second service area identifier of the first multicast service.

It should be noted that the first information may specifically be a message, or may be an information element in the message. This is not limited. In addition, a quantity of second service area identifiers that may be requested by using the first information is not limited. In other words, there may be one or more second service area identifiers.

For ease of description, the following uses an example in which the first information requests one second service area identifier of the first multicast service for description.

In an example, the second service area identifier of the first multicast service identifies an area including one or more cells. For example, a SAI 1 identifies an area including a cell a and a cell b, and in this case, the SAI 1={cell a, cell b}; SAI 2 identifies an area including the cell a, and in this case, the SAI 2={cell a}; SAI 3 identifies an area including the cell a, the cell b, and a cell c, and in this case, the SAI 3={cell a, cell b, cell c}.

In addition, the second service area identifier may identify a second service area, and may specifically further indicate a location of UE to a CN.

In another example, the second service area identifier of the first multicast service may include one or more service area identifiers, and each service area identifier may be any number from 0 to 65535. When the service area identifier is 0, it may indicate a set of cells on an entire network. A service area identifier is configured by an operator and corresponds to one or more cells. For example, the second service area identifier of the first multicast service may be {0}, {123}, {65534}, {65531, 65532}, or the like.

In another example, the second service area identifier of the first multicast service may be similar to a structure and a usage manner of an existing multimedia broadcast/multicast service service area identifier (multimedia broadcast/multicast service SAI, MBMS SAI).

For example, the first information indicates at least one of the following: a first service area (service area, SA) of the first multicast service, a type of the first multicast service, or the first multicast service.

A manner in which the first information indicates the first service area of the first multicast service is not limited in examples of this disclosure. For example, the first information includes the first service area of the first multicast service or an index/identifier of the first service area. The index/identifier of the first service area identifies the first service area.

In an example, the first service area of the first multicast service may include one or more MBMS SAIs. In any case, each MBMS SA cannot include more than 256 MBMS SAIs. The MBMS SAI is to identify a group of cells within a PLMN, and the cell is independent of an associated location/routing/service area and a physical location of the cell. One cell is to belong to one or more MBMS SAs, and therefore is addressable by the one or more MBMS SAs. The MBMS SA is configuration information within the PLMN, and may be obtained by the application server through configuration, or may be obtained in another manner, for example, through reporting by the UE.

In another example, the first service area of the first multicast service may consist of one or more cell identifiers (cell ids), or may consist of one or more tracking areas (tracking areas, TAs). The cell identifier and the tracking area may be obtained by the application server through configuration, or may be obtained in another manner, for example, through reporting by the UE.

In another example, the first service area of the first multicast service may consist of information about a geographical area, for example, a range of longitude and latitude coordinates and a street name. Then, another network element (for example, an NEF network element) within the PLMN network converts the information about the geographic area into a corresponding identifier of the PLMN network, for example, a cell list (cell list), where the cell list may include one or more cell identifiers; or a tracking area list (tracking area list, TAI), where the tracking area list includes one or more tracking area identifiers; or a base station identifier list (RAN id list), where the base station identifier list may include one or more base station identifiers.

A manner in which the first information indicates the type of the first multicast service is not limited in examples of this disclosure. For example, the first information includes the type of the first multicast service or the index/identifier of the type of the first multicast service, and the index/identifier of the type of the first multicast service identifies the type of the first multicast service.

The type of the first multicast service identifies a service type of the first multicast service. The service type may identify a service of a specific type. For example, the type of the first multicast service includes a public safety (public safety) service type, a V2X service type, a video (Video) service type, a broadcast television service type, an IoT service type, a general service type, or the like. Specifically, the public safety service type may identify a service whose service type is public safety.

For example, if the first multicast service is the map update service, the type of the first multicast service may be the public safety service type or the general service type.

For another example, if the first multicast service is the video transmission service, the type of the first multicast service may be the video service type.

For another example, if the first multicast service is the IoT software upgrade service, the type of the first multicast service may be the IoT service type.

A manner in which the first information indicates the first multicast service is not limited in examples of this disclosure. For example, the first information includes the first multicast service or an identifier of the first multicast service, and the identifier of the first multicast service identifies the first multicast service.

For example, the identifier of the first multicast service may be a name of the first multicast service. In some examples, the identifier of the first multicast service may alternatively be implemented by another identifier.

In an example, the another identifier includes an application identifier (application identifier).

Further, the first multicast service may be determined based on the application identifier.

For example, the identifier of the first multicast service may be com.example.applicationid1. The multicast session management network element learns, based on all or a part of fields in the com.example.applicationid1, that the first multicast service is a service of a broadcast television type.

For another example, the identifier of the first multicast service may be com.facebook.xyz. The multicast session management network element determines, based on all or a part of fields in the com.facebook.xyz, for example, an identifier of facebook, that the first multicast service is a service of a video type.

For still another example, the identifier of the first multicast service may be com.whatsapp. The multicast session management network element determines, based on all or a part of fields in the com.whatsapp, for example, an identifier of whatsapp, that the first multicast service is a service of a general type.

In another example, the another identifier includes an identifier of a feature of the first multicast service, for example, an IP multicast address and/or a port number.

Further, the first multicast service may be determined based on a correspondence between the identifier of the feature of the first multicast service and the first multicast service.

S220: The multicast session management network element sends the second service area identifier of the first multicast service to the application server based on the first information.

Correspondingly, the application server receives the second service area identifier that is of the first multicast service and that is sent by the multicast session management network element.

It should be noted that a quantity of second service area identifiers sent by the multicast session management network element to the application server is not limited in examples of this disclosure. In other words, the multicast session management network element may send one or more second service area identifiers to the application server.

For ease of description, the following uses an example in which the multicast session management network element sends one second service area identifier to the application server for description. In some examples, S220 specifically includes: The multicast session management network element determines the second service area identifier that is of the first multicast service and that corresponds to the first information. The multicast session management network element sends the second service area identifier of the first multicast service to the application server.

It should be noted that a quantity of second service area identifiers that are of the first multicast service and that are determined by the multicast session management network element is not limited in examples of this disclosure. In other words, the multicast session management network element may determine one or more second service area identifiers of the first multicast service.

For ease of description, the following uses an example in which the multicast session management network element determines one second service area identifier for description.

When the first information indicates the first service area of the first multicast service, a manner A and a manner B described below are used as examples to describe how the multicast session management network element determines the second service area identifier that is of the first multicast service and that corresponds to the first information.

Manner A: The multicast session management network element may first obtain, based on the first information, a first cell list, a first tracking area list, or a first base station list that corresponds to the first multicast service; and then the multicast session management network element obtains the second service area identifier of the first multicast service based on the first cell list, the first tracking area list, or the first base station list.

For example, the multicast session management network element may obtain, based on a correspondence between a cell list/a tracking area list/a base station list and a service area identifier, a service area identifier corresponding to the first cell list, the first tracking area list, or the first base station list, and use the service area identifier as the second service area identifier. In this example, the first service area of the first multicast service may be identified by the cell list, the tracking area list, or the base station list.

A storage location of the correspondence between a cell list/a tracking area list/a base station list and a service area identifier is not limited in examples of this disclosure.

In an example, the correspondence between a cell list/a tracking area list/a base station list and a service area identifier may be stored in the multicast session management network element.

For example, the multicast session management network element stores a correspondence of {SAI, cell id/TA id/RAN id}. The multicast session management network element finds, based on the cell id/TA id/RAN id, a SAI corresponding to the first cell list, the first tracking area list, or the first base station list, and uses the SAI as the second service area identifier of the first multicast service.

In another example, the correspondence between a cell list/a tracking area list/a base station list and a service area identifier may be stored in another network element, for example, an NEF, a UDM, or an NRF. In this case, the multicast session management network element sends a query request message to a network element (for example, the UDM, the NEF, or the NRF) configured to store the correspondence between a cell list/a tracking area list/a base station list and a service area identifier. The query request message includes the first cell list, the first tracking area list, or the first base station list. Then, the network element configured to store the correspondence between a cell list/a tracking area list/a base station list and a service area identifier returns, to the multicast session management network element, the service area identifier corresponding to the first cell list, the first tracking area list, or the first base station list, and the multicast session management network element uses the service area identifier as the second service area identifier of the first multicast service.

Manner B: The multicast session management network element or another network element (for example, the NEF or the UDM) in a network performs authentication on a service area of the first multicast service, for example, whether the application server is authorized to transmit data of the multicast/broadcast service in the service area of the first multicast service. If the authentication succeeds, the multicast session management network element uses the service area of the first multicast service as a service area corresponding to the second service area identifier of the first multicast service. Alternatively, if the authentication partially succeeds (for example, the application server is authorized to transmit the data of the multicast/broadcast service in only a part of areas), the multicast session management network element uses the authorized part of the service area of the first multicast service as a service area corresponding to the second service area identifier of the first multicast service.

When the first information includes the type of the first multicast service, a manner C described below is used as an example to describe how the multicast session management network element determines the second service area identifier that is of the first multicast service and that corresponds to the first information.

Manner C: The multicast session management network element may obtain, based on a locally configured correspondence between a type of a multicast service and a service area identifier, a service area identifier corresponding to the type of the first multicast service, and use the service area identifier as the second service area identifier of the first multicast service.

In an example, the PLMN network uses different service areas for different services, and the PLMN network configures a correspondence between a service type and a service area on a multicast session management network element side. For example, a correspondence such as {service type 1, SA a} and {service type 2, SA b} is configured on the multicast session management network element. The multicast session management network element finds, based on the type of the first multicast service (for example, the service type 1) and the foregoing correspondence (for example, the {service type 1, SA a}), a service area (for example, the SA a) corresponding to the type of the first multicast service, and the service area is the second service area identifier of the first multicast service.

In another example, the PLMN network stores a correspondence (for example, the {service type 1, SA a} and the {service type 2, SA b}) between a service type and a service area in a specific network element (for example, the NEF, the UDM, or the NRF). The multicast session management network element sends the type (for example, the service type 1) of the first multicast service to the network element that stores the correspondence between a service type and a service area. The network element that stores the correspondence between a service type and a service area finds, based on the type of the first multicast service and the correspondence (for example, the {service type 1, SA a}), a service area (for example, the SA a) corresponding to the type of the first multicast service, where the service area is the second service area identifier of the first multicast service, and returns the service area identifier to the multicast session management network element.

When the first information includes the identifier of the first multicast service, the multicast session management network element may first obtain the first multicast service based on the identifier of the first multicast service, and then the multicast session management network element determines the second service area identifier of the first multicast service based on the type of the first multicast service.

For an example in which the multicast session management network element determines the second service area identifier of the first multicast service based on the type of the first multicast service, refer to the description of the manner C. Details are not described herein again.

It should be noted that when the first information indicates at least two of the first service area of the first multicast service, the type of the first multicast service, or the identifier of the first multicast service, the multicast session management network element may determine the second service area identifier based on at least one of the solution of determining the second service area identifier based on the service area that is of the first multicast service and that is indicated by the first information, the solution of determining the second service area identifier based on the type that is of the first multicast service and that is included in the first information, or the solution of determining the second service area identifier based on the identifier that is of the first multicast service and that is included in the first information.

S230: The application server notifies a terminal device of the second service area identifier of the first multicast service. In other words, the application server sends the second service area identifier of the first multicast service to the terminal device.

Correspondingly, the terminal device receives the second service area identifier of the first multicast service from the application server.

According to the communication method 200 provided in the foregoing example, the application server sends the first information to the multicast session management network element, to request the second service area identifier of the first multicast service. Further, the multicast session management network element sends the second service area identifier of the first multicast service to the application server based on the first information. In this way, the application server may obtain the second service area identifier of the first multicast service when the application server does not learn of network topology information.

In some examples, S210 to S230 may be implemented in a procedure in which the application server requests allocation of a temporary multicast group identifier.

For example, S210 to S230 are implemented via existing messages in the procedure in which the application server requests the allocation of the temporary multicast group identifier. For example, the first information in S210 may be carried in an existing temporary multicast group identifier allocation request (nnef_tmgi_allocate request) message. In S220, the second service area identifier of the first multicast service may be carried in a response message of the existing temporary multicast group identifier allocation request message. The second service area identifier of the first multicast service in S230 may be carried in an existing service announcement (service announcement) message, a service announcement message, or a service notification message.

For example, implementation of S210 and S220 are independent of an existing message in the procedure in which the application server requests the allocation of the temporary multicast group identifier. S230 is implemented via the existing message in the procedure in which the application server requests the allocation of the temporary multicast group identifier. For example, S210 and S220 are performed after an existing application server receives a response message of a temporary multicast group identifier allocation request message and before the existing application server sends the service announcement (service announcement) message. The second service area identifier of the first multicast service in S230 may be carried in the existing service announcement (service announcement) message.

Optionally, in some examples, as shown in FIG. 3, the communication method 200 further includes S240.

S240: The multicast session management network element sends second information of the first multicast service to the application server.

Correspondingly, the application server receives the second information of the first multicast service from the multicast session management network element.

It should be noted that the second information may specifically be a message, or may be an information element in the message. This is not limited.

The second information includes at least one of the following: a frequency of the first multicast service or a temporary multicast group identifier of the first multicast service.

It should be noted that, in this example, S240 needs to be performed only after S210. A sequence between S240 and S220 or between S240 and S230 is not limited in this example of this disclosure. It should be noted that a quantity of frequencies of the first multicast service and/or a quantity of temporary mobile group identities of the first multicast service that are sent by the multicast session management network element to the application server are/is not limited in examples of this disclosure. In other words, the multicast session management network element may send one or more frequencies of the first multicast service and/or one or more temporary mobile group identities of the first multicast service to the application server.

For ease of description, the following uses an example in which the multicast session management network element sends one frequency of the first multicast service and/or one temporary multicast group identifier of the first multicast service to the application server for description.

In some examples, S240 specifically includes: The multicast session management network element determines, based on the first information, the second information that is of the first multicast service and that corresponds to the first information. The multicast session management network element sends the second information of the first multicast service to the application server.

It should be noted that the quantity of frequencies of the first multicast service and/or the quantity of temporary mobile group identities of the first multicast service that are determined by the multicast session management network element are/is not limited in examples of this disclosure. In other words, the multicast session management network element may determine one or more frequencies of the first multicast service and/or one or more temporary mobile group identities of the first multicast service.

For ease of description, the following uses an example in which the multicast session management network element determines one frequency of the first multicast service and/or one temporary multicast group identifier of the first multicast service for description.

For example, the multicast session management network element determines, based on a correspondence between a frequency/temporary multicast group identifier of a multicast service and a service area/a type of the multicast service/a multicast service, a frequency/temporary multicast group identifier that is of a multicast service and that corresponds to the first service area of the first multicast service/the type of the first multicast service/the first multicast service, and uses the frequency/the temporary multicast group identifier as the frequency/the temporary multicast group identifier of the first multicast service.

A storage location of the correspondence between a frequency/temporary multicast group identifier of a multicast service and a service area/a type of the multicast service/a multicast service is not limited in examples of this disclosure. For example, the correspondence between a frequency/temporary multicast group identifier of a multicast service and a service area/a type of the multicast service/a multicast service may be stored in the multicast session management network element, or may be stored in another network element, for example, the NEF, the UDM, or the NRF. When a correspondence between a frequency of a multicast service and a service area is stored in the another network element, the multicast session management network element may obtain the frequency/the temporary multicast group identifier of the first multicast service by interacting with the another network element.

In some examples, a correspondence between a frequency/temporary multicast group identifier of the multicast service and a service area may be alternatively replaced with a correspondence between a frequency/temporary multicast group identifier of the multicast service and a cell identifier, a tracking area identifier, or a base station identifier. In this case, the multicast session management network element may first determine, based on a first service area, a first cell identifier, a first tracking area identifier, or a first base station identifier that is of the first multicast service and that corresponds to the first service area. Then, the multicast session management network element determines, based on the correspondence between a frequency/temporary multicast group identifier of the multicast service and a cell identifier, a tracking area identifier, or a base station identifier, a frequency/temporary multicast group identifier that is of the multicast service and that corresponds to the first service area, the first tracking area identifier, or the first base station identifier corresponding to the first service area, and uses the frequency/temporary multicast group identifier as the frequency/temporary multicast group identifier of the first multicast service.

For example, the multicast session management network element may further determine, based on the first information, that the first information does not include the temporary multicast group identifier of the first multicast service, and the multicast session management network element determines that the temporary multicast group identifier of the first multicast service needs to be allocated. For example, the multicast session management network element selects an available temporary multicast group identifier from a temporary multicast group identifier resource pool preconfigured by a network, and uses the available temporary multicast group identifier as the temporary multicast group identifier of the first multicast service.

A storage location of the temporary multicast group identifier resource pool preconfigured by the network is not limited in examples of this disclosure. For example, the temporary multicast group identifier resource pool preconfigured by the network may be stored in the multicast session management network element, or may be stored in another network element, for example, the NEF, the UDM, or the NRF. When the temporary multicast group identifier resource pool is stored in the another network element, the multicast session management network element may obtain the temporary multicast group identifier of the first multicast service by interacting with the another network element.

It should be noted that in some examples, the multicast session management network element may perform the foregoing solution of determining, based on the first information, the frequency that is of the first multicast service and that corresponds to the first information and the foregoing solution of determining, based on the first information, the temporary multicast group identifier that is of the first multicast service and that corresponds to the first information.

In some other examples, S240 specifically includes: The multicast session management network element determines, based on the second service area identifier of the first multicast service, the second information that is of the first multicast service and that corresponds to the second service area identifier of the first multicast service. The multicast session management network element sends the second information of the first multicast service to the application server.

For example, the multicast session management network element may determine, based on the correspondence between a frequency/a temporary multicast group identifier of the multicast service and a service area, the second information that is of the first multicast service and that corresponds to the second service area identifier of the first multicast service. For a specific process, refer to the foregoing description. Details are not described herein again.

A storage location of the correspondence between a frequency/temporary multicast group identifier of the multicast service and a service area is not limited in examples of this disclosure. For example, the correspondence between a frequency/temporary multicast group identifier of the multicast service and a service area may be stored in the multicast session management network element; or may be stored in another network element, for example, the UDM, a user data repository (user data repository, UDR), a PCF, the NRF, the NEF, an MBSF-NEF, or a network element dedicated to multicast and broadcast. The correspondence between a frequency/temporary multicast group identifier of the multicast service and a service area may be independently deployed, or may be implemented by enhancing a function of an existing network element. When a correspondence between a network device and a service area corresponding to the network device is stored in the another network element, the multicast session management network element may obtain, by interacting with the another network element, the second information that is of the first multicast service and that corresponds to the second service area identifier of the first multicast service.

Optionally, in some examples, as shown in FIG. 3, the communication method 200 further includes S250.

S250: The application server notifies the terminal device of the second information of the first multicast service. In other words, the application server sends the second information of the first multicast service to the terminal device.

Correspondingly, the terminal device receives the second information of the first multicast service from the application server.

In some examples, S240 and S250 may alternatively be implemented in a procedure in which the application server requests allocation of the temporary multicast group identifier.

For example, S240 is implemented via the existing message in the procedure in which the application server requests the allocation of the temporary multicast group identifier. For example, the second information in S240 may be carried in the response message of the existing temporary multicast group identifier allocation request message. The second information of the first multicast service in S250 may be carried in the existing service announcement (service announcement) message.

For example, implementation of S240 is independent of the existing message in the procedure in which the application server requests the allocation of the temporary multicast group identifier. S250 is implemented via the existing message in the procedure in which the application server requests the allocation of the temporary multicast group identifier. For example, S240 is performed after the existing application server receives the response message of the temporary multicast group identifier allocation request message and before the existing application server sends the service announcement (service announcement) message. The second information of the first multicast service in S250 may be carried in the existing service announcement (service announcement) message.

Optionally, in some examples, as shown in FIG. 3, the communication method 200 further includes S260 and S270.

S260: The application server sends a session creation request message to the multicast session management network element.

Correspondingly, the multicast session management network element receives the session creation request message from the application server.

In some examples, the session creation request message may be understood as a creation request message of the foregoing multicast session.

It should be noted that the session creation request message may be executed in a procedure in which the application server requests the identifier of the first service area of the first multicast service, or this may be understood as that the session creation request message is executed in a procedure in which the multicast session management network element allocates/configures the identifier of the first service area.

Optionally, the session creation request message may or may not carry the first service area identifier of the first multicast service, the second service area identifier of the first multicast service, and/or the second information of the first multicast service.

S270: The multicast session management network element notifies a first network device of the second service area identifier of the first multicast service based on the session creation request message.

Optionally, the multicast session management network element may further notify the first network device of the frequency of the first multicast service, the first service area of the first multicast service, and/or the temporary multicast group identifier of the first multicast service.

Optionally, in some examples, S270 specifically includes: The multicast session management network element determines the first network device. The multicast session management network element notifies the first network device of the second service area identifier of the first multicast service.

In an example, the multicast session management network element may determine the first network device based on a local configuration or the first service area of the first multicast service. For example, the multicast session management network element may determine, based on the correspondence between a network device and a service area (for example, a cell id/list, a TA id/list, or a RAN id/list) corresponding to the network device, a network device corresponding to the first service area of the first multicast service, and use the network device, corresponding to the first service area of the first multicast service, as the first network device.

A storage location of the correspondence between a network device and a service area corresponding to the network device is not limited in examples of this disclosure. For example, the correspondence between a network device and a service area corresponding to the network device may be stored in the multicast session management network element, or may be stored in another network element, for example, the NEF, the UDM, or the NRF. When the correspondence between a network device and a service area corresponding to the network device is stored in the another network element, the multicast session management network element may obtain the first network device by interacting with the another network element.

In another example, the multicast session management network element may forward, to a first access and mobility management function, content carried in the session creation request message. Further, the first access and mobility management function determines the first network device based on a local configuration or the first service area of the first multicast service. The first access and mobility management function notifies the first network device of the second service area identifier of the first multicast service.

For example, the multicast session management network element may determine, based on a correspondence between an access and mobility management function and a service area (for example, a cell id/list, a TA id/list, or a RAN id/list) corresponding to the access and mobility management function, an access and mobility management function corresponding to the first service area of the first multicast service, and use the access and mobility management function, corresponding to the first service area of the first multicast service, as the first access and mobility management function.

A storage location of the correspondence between an access and mobility management function and a service area corresponding to the access and mobility management function is not limited in examples of this disclosure. For example, the correspondence between an access and mobility management function and a service area corresponding to the access and mobility management function may be stored in the multicast session management network element, or may be stored in another network element, for example, the NEF, the UDM, or the NRF. When the correspondence between an access and mobility management function and a service area corresponding to the access and mobility management function is stored in another network element, the multicast session management network element may obtain the first access and mobility management function by interacting with the another network element.

Further, in an example, the first access and mobility management function may determine, based on a correspondence between a network device and a service area (for example, a cell id/list, a TA id/list, or a RAN id/list) corresponding to the network device, a network device corresponding to the first service area of the first multicast service, and use the network device, corresponding to the first service area of the first multicast service, as the first network device.

A storage location of the correspondence between a network device and a service area corresponding to the network device is not limited in examples of this disclosure. For example, the correspondence between a network device and a service area corresponding to the network device may be stored in the first access and mobility management function network element, or may be stored in another network element, for example, the NEF, the UDM, or the NRF. When the correspondence between a network device and a service area corresponding to the network device is stored in the another network element, the first access and mobility management function network element may obtain the first network device by interacting with the another network element.

In another example, the first access and mobility management function may send the first service area identifier of the first multicast service and/or the second service area identifier of the first multicast service to all network devices that establish a next generation application protocol NGAP (next generation application protocol) connection. After receiving the first service area identifier of the first multicast service and the second service area identifier of the first multicast service, the network device determines whether the network device is located in the first service area of the first multicast service and/or the second service area of the first multicast service. When a cell corresponding to the network device or a tracking area corresponding to the network device has an intersection with the first service area of the first multicast service and/or the second service area of the first multicast service, or when a cell corresponding to the network device or a tracking area corresponding to the network device includes the first service area of the first multicast service and/or the second service area of the first multicast service, this may be considered as that the network device is located in the first service area of the first multicast service and/or the second service area of the first multicast service. Then, the network device may feed back a determining result to the first access and mobility management function. When the determining result indicates that the network device is located in the first service area of the first multicast service and/or the second service area of the first multicast service, the network device may be used as the first network device.

A specific form of the determining result is not limited in examples of this disclosure. For example, the determining result may indicate that this is successful or unsuccessful. When the determining result indicates that this is successful, the network device is located in the first service area of the first multicast service and/or the second service area of the first multicast service. When the determining result indicates that this is not successful, the network device is not located in the first service area of the first multicast service and/or the second service area of the first multicast service. Optionally, the network device may alternatively feed back success information to the first access and mobility management function only when the network device is located in the first service area of the first multicast service and/or the second service area of the first multicast service. In this case, a network device corresponding to the success information received by the first access and mobility management function may be used as the first network device.

In S270, when the multicast session management network element allocates the second service area identifier of the first multicast service, the multicast session management network element further notifies a corresponding network device of the second service area identifier of the first multicast service. In this way, the corresponding network device, namely, the first network device, may be dynamically controlled to broadcast the second service area identifier of the first multicast service.

Optionally, in some examples, as shown in FIG. 3, the communication method 200 further includes S280.

S280: The first network device sends a response message to the multicast session management network element. The response message indicates that the first network device has received the second service area identifier of the first multicast service.

Correspondingly, the multicast session management network element receives the response message from the first network device.

Optionally, in some examples, as shown in FIG. 3, the communication method 200 further includes S290.

S290: The first network device broadcasts the second service area identifier of the first multicast service.

Optionally, the first network device may further broadcast the frequency of the first multicast service, the first service area of the first multicast service, and/or the temporary multicast group identifier of the first multicast service.

Optionally, the first network device may include the second service area identifier of the first multicast service, the frequency of the first multicast service, the first service area of the first multicast service, and/or the temporary multicast group identifier of the first multicast service in a system broadcast message.

In some examples, the application server may perform information transmission with the multicast session management network element via a network display function or a multicast/broadcast service function.

For example, the application server first sends the first information to the network display function or the multicast/broadcast service function, and then the network display function or the multicast/broadcast service function sends the first information to the multicast session management network element.

For another example, the multicast session management network element first sends the second information or the second service area identifier of the first multicast service to the network display function or the multicast/broadcast service function, and then the network display function or the multicast/broadcast service function sends the second information or the second service area identifier of the first multicast service to the application server.

In an example in which the application server performs the information transmission with the multicast session management network element via the network display function or the multicast/broadcast service function, after S210, to be specific, after receiving the first information described above, the network display function or the multicast/broadcast service function may perform authentication on a request of the application server. The authentication may be mainly implemented by querying subscription information of the application server.

For example, the network display function or the multicast/broadcast service function may perform authentication on whether the application server can send the first information; or may perform authentication on a parameter (for example, content specifically represented by the first information) sent by the application server; or may perform authentication on whether the application server can request the second service area identifier of the first multicast service.

If the authentication of the application server succeeds, the network display function or the multicast/broadcast service function may obtain identification information of the multicast session management network element by querying an NRF network repository function. For example, the application server may further indicate information such as a data network name and a slice in the first information in S210, and the network display function or the multicast/broadcast service function uses the information as an input of an NRF query, to obtain the identification information of the multicast session management network element, and then send the first information to the multicast/broadcast service function. For another example, the network display function or the multicast/broadcast service function may obtain the identification information of the multicast session management network element in a manner of local configuration, and then send the first information to the multicast/broadcast service function.

In some other examples, if the application server has a capability of providing information for a core network or invoking a service opened by a core network element, the application server may directly communicate with the multicast session management network element.

It may be understood that some optional features in examples of this disclosure may not depend on another feature in some scenarios, or may be combined with another feature in some scenarios. This is not limited.

It may be further understood that solutions in examples of this disclosure may be properly combined for usage, and explanations or descriptions of terms in examples may be mutually referred to or explained in examples. This is not limited.

It may be further understood that various numeric sequence numbers in examples of this disclosure do not mean execution sequences, but are merely for differentiation for ease of description, and should not constitute any limitation on an implementation process of examples of this disclosure. It may be further understood that some message names, such as the temporary multicast group identifier allocation request message, are involved in examples of this disclosure. It should be understood that the message names do not limit the protection scope of examples of this disclosure. It may be further understood that in the foregoing communication method examples, a communication method and an operation that are implemented by the multicast session management network element may be implemented by a component (for example, a chip or a circuit) of the multicast session management network element. A communication method and an operation that are implemented by the application server may be implemented by a component (for example, a chip or a circuit) of the application server. In addition, a communication method and an operation that are implemented by the first network device may be implemented by a component (for example, a chip or a circuit) of the first network device. This is not limited.

Corresponding to the communication methods provided in the foregoing communication method examples, examples of this disclosure further provides corresponding apparatuses, and the apparatus includes a corresponding module configured to perform the foregoing communication method example. The module may be software, hardware, or a combination of software and hardware. It may be understood that the technical features described in the foregoing communication method examples are also applicable to the following apparatus examples.

FIG. 4 is a schematic block diagram of an apparatus according to an example of this disclosure. The apparatus 400 includes a transceiver unit 410, and the transceiver unit 410 may be configured to implement a corresponding communication function. The transceiver unit 410 may also be referred to as a communication interface or a communication unit.

Optionally, the apparatus 400 may further include a processing unit 420, and the processing unit 420 may be configured to perform data processing.

Optionally, the apparatus 400 further includes a storage unit. The storage unit may be configured to store instructions and/or data. The processing unit 420 may read the instructions and/or the data in the storage unit, to enable the apparatus to implement actions of different devices in the foregoing communication method examples, for example, an action of a multicast session management network element, an action of an application server, and an action of a first network device.

The apparatus 400 may be configured to perform the action performed by the multicast session management network element in the foregoing communication method example. In this case, the apparatus 400 may be the multicast session management network element or a component of the multicast session management network element. The transceiver unit 410 is configured to perform a related operation of receiving and sending on a multicast session management network element side in the foregoing communication method example. The processing unit 420 is configured to perform a related operation of processing on the multicast session management network element side in the foregoing communication method example.

In a design, the apparatus 400 is configured to perform the action performed by the multicast session management network element in the foregoing communication method example.

In a possible implementation, the transceiver unit 410 is configured to receive first information of a first multicast service from the application server, where the first information indicates at least one of the following: a first service area of the first multicast service, a type of the first multicast service, or the first multicast service. The processing unit 420 is configured to send a second service area identifier of the first multicast service to the application server based on the first information.

Optionally, the processing unit 420 is further specifically configured to: determine the second service area identifier that is of the first multicast service and that corresponds to the first information; and send the second service area identifier of the first multicast service to the application server.

Optionally, the transceiver unit 410 is further configured to send second information of the first multicast service to the application server, where the second information includes at least one of the following: a frequency of the first multicast service or a temporary multicast group identifier of the first multicast service.

Optionally, the first information is carried in a temporary multicast group identifier allocation request message.

Optionally, the second service area identifier of the first multicast service is carried in a response message of the temporary multicast group identifier allocation request message.

Optionally, the transceiver unit 410 is further configured to receive a session creation request message from the application server. The processing unit 420 is further configured to notify, by the multicast session management network element, the first network device of the second service area identifier of the first multicast service based on the session creation request message.

The apparatus 400 may implement corresponding steps or procedures performed by the multicast session management network element in the communication method example according to examples of this disclosure. The apparatus 400 may include units configured to perform the communication method performed by the multicast session management network element in example shown in FIG. 2, or include units configured to perform the communication method performed by the multicast session management network element in example shown in FIG. 3.

It should be understood that a specific process in which the units perform the foregoing corresponding steps is described in detail in the foregoing communication method examples. For brevity, details are not described herein again.

In another design, the apparatus 400 is configured to perform the action performed by the application server in the foregoing communication method example.

In a possible implementation, the transceiver unit 410 is configured to send first information of a first multicast service to the multicast session management network element, where the first information includes at least one of the following: a first service area of the first multicast service, a type of the first multicast service, or the first multicast service. The transceiver unit 410 is further configured to receive a second service area identifier of the first multicast service from the multicast session management network element. The transceiver unit 410 is further configured to notify a terminal device of the second service area identifier of the first multicast service.

Optionally, the transceiver unit 410 is further configured to receive second information of the first multicast service from the multicast session management network element, where the second information includes at least one of the following: a frequency of the first multicast service or a TMGI of the first multicast service.

Optionally, the first information is carried in a temporary multicast group identifier TMGI allocation request message.

Optionally, the second service area identifier of the first multicast service is carried in a response message of the TMGI allocation request message.

Optionally, the transceiver unit 410 is further configured to notify the terminal device of the second service area identifier that is of the first multicast service and that is carried in a service announcement message.

The apparatus 400 may implement steps or procedures performed by the application server in the communication method example according to examples of this disclosure. The apparatus 400 may include units configured to perform the communication method performed by the application server in example shown in FIG. 2, or include units configured to perform the communication method performed by the application server in example shown in FIG. 3.

It should be understood that a specific process in which the units perform the foregoing corresponding steps is described in detail in the foregoing communication method examples. For brevity, details are not described herein again.

In still another design, the apparatus 400 is configured to perform the action performed by the first network device in the foregoing communication method example.

In a possible implementation, the transceiver unit 410 is configured to receive a second service area identifier of a first multicast service; and the transceiver unit 410 is further configured to broadcast the second service area identifier of the first multicast service.

Optionally, the transceiver unit 410 is further configured to: receive second information of the first multicast service and/or a first service area of the first multicast service; and broadcast the second information of the first multicast service and/or the first service area of the first multicast service, where the second information includes at least one of the following: a frequency of the first multicast service or a temporary multicast group identifier of the first multicast service.

The apparatus 400 may implement steps or procedures performed by the application server in the communication method example according to an example of this disclosure. The apparatus 400 may include units configured to perform the communication method performed by the first network device in examples shown in FIG. 3.

It should be understood that a specific process in which the units perform the foregoing corresponding steps is described in detail in the foregoing communication method examples. For brevity, details are not described herein again.

It should be further understood that the apparatus 400 herein is embodied in a form of a functional unit. The term "unit" herein may refer to an application-specific integrated circuit (application specific integrated circuit, ASIC), an electronic circuit, a processor configured to perform one or more software or firmware programs (such as a shared processor, a dedicated processor, or a group processor) and a memory, a combined logic circuit, and/or another appropriate component that supports the described functions. In an optional example, a person skilled in the art may understand that the apparatus 400 may be specifically the multicast session management network element in the foregoing example, and may be configured to perform procedures and/or steps corresponding to the multicast session management network element in the foregoing communication method example; or the apparatus 400 may be specifically the application server in the foregoing example, and may be configured to perform procedures and/or steps corresponding to the application server in the foregoing communication method example; or the apparatus 400 may be specifically the first network device in the foregoing example, and may be configured to perform procedures and/or steps corresponding to the first network device in the foregoing communication method example. To avoid repetition, details are not described herein again.

The apparatus 400 in the foregoing solutions has a function of implementing corresponding steps performed by the multicast session management network element in the foregoing communication method, or the apparatus 700 in the foregoing solutions has a function of implementing corresponding steps performed by the application server in the foregoing communication method, or the apparatus 700 in the foregoing solutions has a function of implementing corresponding steps performed by the first network device in the foregoing communication method. The function may be implemented by hardware, or may be implemented by hardware by executing corresponding software. The hardware or software includes one or more modules corresponding to the foregoing functions. For example, the transceiver unit may be replaced with a transceiver (where for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the communication method examples.

In addition, the transceiver unit 410 may be a transceiver circuit (for example, may include a receiver circuit and a transmitter circuit), and the processing unit may be a processing circuit.

It should be noted that the apparatus in FIG. 4 may be the network element or the device in the foregoing examples, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

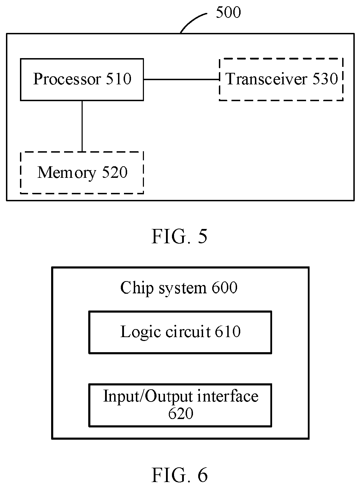

As shown in FIG. 5, an example of this disclosure provides another apparatus 500. The apparatus 500 includes a processor 510. The processor 510 is coupled to a memory 520. The memory 520 is configured to store a computer program or instructions and/or data. The processor 510 is configured to execute the computer program or the instructions stored in the memory 520, or read the data stored in the memory 520, to perform the communication methods in the foregoing communication method examples.

Optionally, there are one or more processors 510.

Optionally, there are one or more memories 520.

Optionally, the memory 520 may be integrated with the processor 510, or may be disposed separately.

Optionally, as shown in FIG. 5, the apparatus 500 further includes a transceiver 530. The transceiver 530 is configured to receive and/or send a signal. For example, the processor 510 is configured to control the transceiver 530 to receive and/or send the signal.

In a solution, the apparatus 500 is configured to implement operations performed by the multicast session management network element in the foregoing communication method examples.

For example, the processor 510 is configured to execute the computer program or the instructions stored in the memory 520, to implement related operations of the multicast session management network element in the foregoing communication method examples, for example, the communication method performed by the multicast session management network element in example shown in FIG. 2, or the communication method performed by the multicast session management network element in example shown in FIG. 3.

For another example, the processor 510 is configured to execute the computer program or the instructions stored in the memory 520, to implement related operations of the application server in the foregoing communication method examples, for example, the communication method performed by the application server in example shown in FIG. 2, or the communication method performed by the application server in example shown in FIG. 3.

For still another example, the processor 510 is configured to execute the computer program or the instructions stored in the memory 520, to implement related operations of the first network device in the foregoing communication method examples, for example, the communication method performed by the first network device in example shown in FIG. 3.

It should be understood that, the processor mentioned in examples of this disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should be further understood that the memory mentioned in examples of this disclosure may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another appropriate type.

As shown in FIG. 6, an example of this disclosure provides a chip system 600. The chip system 600 (or may be referred to as a processing system) includes a logic circuit 610 and an input/output interface (input/output interface) 620.

The logic circuit 610 may be a processing circuit in the chip system 600. The logic circuit 610 may be coupled and connected to a storage unit, and invoke instructions in the storage unit, to enable the chip system 600 to implement the communication methods and functions in examples of this disclosure. The input/output interface 620 may be an input/output circuit in the chip system 600, and outputs information processed by the chip system 600, or inputs to-be-processed data or signaling information into the chip system 600 for processing.

Specifically, for example, if the chip system 600 is installed on a multicast session management network element, the logic circuit 610 is coupled to the input/output interface 620, and the logic circuit 610 may receive first information of a first multicast service from an application server through the input/output interface 620; or the input/output interface 620 may input the first information from the application server to the logic circuit 610 for processing. For another example, if the chip system 600 is installed on an application server, the logic circuit 610 is coupled to the input/output interface 620, and the logic circuit 610 may send first information of a first multicast service to a multicast session management network element through the input/output interface 620; or receive a second service area identifier of a first multicast service from a multicast session management network element through the input/output interface 620; or notify a terminal device of a second service area identifier of a first multicast service through the input/output interface 620. For another example, if the chip system 600 is installed on a first network device, the logic circuit 610 is coupled to the input/output interface 620, and the logic circuit 610 may receive a second service area identifier of a first multicast service through the input/output interface 620, or broadcast a second service area identifier of a first multicast service through the input/output interface 620.

In a solution, the chip system 600 is configured to implement an operation performed by the multicast session management network element in the foregoing communication method examples. For example, the logic circuit 610 is configured to implement an operation that is related to processing and that is performed by the multicast session management network element in the foregoing communication method examples, for example, an operation that is related to processing and that is performed by the multicast session management network element in example shown in FIG. 2, or an operation that is related to processing and that is performed by the multicast session management network element in example shown in FIG. 3. The input/output interface 620 is configured to implement an operation that is related to sending and/or receiving and that is performed by the multicast session management network element in the foregoing communication method examples, for example, an operation that is related to sending and/or receiving and that is performed by the multicast session management network element in example shown in FIG. 2, or an operation that is related to sending and/or receiving and that is performed by the multicast session management network element in example shown in FIG. 3.

For another example, the logic circuit 610 is configured to implement an operation that is related to processing and that is performed by the application server in the foregoing communication method examples, for example, an operation that is related to processing and that is performed by the application server in example shown in FIG. 2, or an operation that is related to processing and that is performed by the application server in example shown in FIG. 3. The input/output interface 620 is configured to implement an operation that is related to sending and/or receiving and that is performed by the application server in the foregoing communication method examples, for example, an operation that is related to sending and/or receiving and that is performed by the application server in example shown in FIG. 2, or an operation that is related to sending and/or receiving and that is performed by the application server in example shown in FIG. 3.

For another example, the logic circuit 610 is configured to implement an operation that is related to processing and that is performed by the first network device in the foregoing communication method example, for example, an operation that is related to processing and that is performed by the first network device in example shown in FIG. 3. The input/output interface 620 is configured to implement an operation that is related to sending and/or receiving and that is performed by the first network device in the foregoing communication method example, for example, an operation that is related to sending and/or receiving and that is performed by the first network device in example shown in FIG. 3.

An example of this disclosure further provides a computer-readable storage medium. The computer-readable storage medium stores computer instructions used for implementing the communication method performed by the multicast session management network element, the application server, or the first network device in the foregoing communication method example.

For example, when a computer program is executed by a computer, the computer is enabled to implement the communication methods performed by the multicast session management network element in the foregoing communication method examples.

An example of this disclosure further provides a computer program product, including instructions. When the instructions are executed by a computer, the communication method performed by the multicast session management network element, the application server, or the first network device in the foregoing communication method example is implemented.

An example of this disclosure further provides a communication system. The communication system includes the multicast session management network element, the application server, and the first network device in the foregoing examples. For example, the system includes the multicast session management network element, the application server, and the first network device in the example shown in FIG. 3.

For explanations and beneficial effect of related content of any one of the apparatuses provided above, refer to the corresponding communication method examples provided above. Details are not described herein again.

In the several examples provided in this disclosure, it should be understood that the disclosed apparatuses and communication methods may be implemented in another manner. For example, the described apparatus examples are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electrical form, a mechanical form, or another form.

All or a part of the foregoing examples may be implemented by using software, hardware, firmware, or any combination thereof. When the software is used for implementation, all or a part of the implementation may be implemented in a form of a computer program product. The computer program product includes one or more computer instructions. When the computer program instructions are loaded and executed on a computer, the procedure or functions according to examples of this disclosure are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium may include but is not limited to any medium that can store program code, such as a USB flash drive, a removable hard disk, a read-only memory (read-only memory, ROM), a random access memory (random access memory, RAM), a magnetic disk, or an optical disc.

## Claims

1. A communication method comprising:
receiving (S210), by a multicast session management network element, first information of a first multicast service from an application server, wherein the first information indicates at least one of the following: a first service area of the first multicast service or the first multicast service; and
sending (S220), by the multicast session management network element, a second service area identifier of the first multicast service to the application server based on the first information, wherein the second service area identifier identifies a second service area, wherein the sending comprises: determining, by the multicast session management network element, the second service area identifier corresponding to the first information; and sending, by the multicast session management network element, the second service area identifier to the application server,
wherein the method further comprises:
receiving, by the multicast session management network element, a session creation request message from the application server, and
notifying, by the multicast session management network element, a first network device of the second service area identifier based on the session creation request message.

2. The communication method according to claim 1, wherein the first information comprises an identifier of the first multicast service.

3. The communication method according to claim 1 or 2, wherein the second service area identifier comprises a multimedia broadcast/multicast service service area identifier, MBMS SAI.

4. The communication method according to any one of claims 1 to 3, wherein the first information comprises an identifier of the first service area, and the identifier of the first service area comprising one or more cell identifiers, or the identifier of the first service area consists of one or more tracking areas, TAs.

5. The communication method according to any one of claims 1 to 4, wherein the first information is carried in a temporary multicast group identifier allocation request message, and wherein the second service area identifier is carried in a response message of the temporary multicast group identifier allocation request message.

6. The communication method according to any one of claims 1 to 5, wherein the method further comprises:
sending, by the multicast session management network element, second information of the first multicast service to the application server, wherein the second information comprises at least one of the following: a frequency of the first multicast service or a temporary multicast group identifier of the first multicast service.

7. The communication method according to any one of claims 1 to 6, wherein the notifying a first network device of the second service area identifier comprises: notifying, by the multicast session management network element, the first network device of the second service area identifier via an access and mobility management function, and wherein the first network device is configured to broadcast the second service area identifier.

8. A communication method comprising:
sending (S210), by an application server, first information of a first multicast service to a multicast session management network element, wherein the first information indicates at least one of the following: a first service area of the first multicast service or the first multicast service;
receiving (S220), by the application server, a second service area identifier of the first multicast service from the multicast session management network element, wherein the second service area identifier corresponds to the first information and identifies a second service area;
sending, by the application server, a session creation request message to the multicast session management network element for the multicast session management network element to notify a first network device of the second service area identifier based on the session creation request message; and
notifying (S230), by the application server, a terminal device of the second service area identifier.

9. The communication method according to claim 8, wherein the method further comprises:
receiving, by the application server, second information of the first multicast service from the multicast session management network element, wherein the second information comprises at least one of the following: a frequency of the first multicast service or a temporary multicast group identifier of the first multicast service.

10. The communication method according to claim 8 or 9, wherein the notifying, by the application server, a terminal device of the second service area identifier comprises:
notifying, by the application server, the terminal device of the second service area identifier that is carried in a service announcement message.

11. A communication method according to any of claims 1 to 10 further comprising:
receiving (S270), by the network device, the second service area identifier of the first multicast service; and
broadcasting (S290), by the network device, the second service area identifier.

12. The communication method according to claim 11, wherein the method further comprises:
receiving, by the network device, second information of the first multicast service; and
broadcasting, by the network device, the second information, wherein
the second information comprises a temporary multicast group identifier of the first multicast service.

13. A communication apparatus, comprising:
a processor, configured to execute computer instructions stored in a memory, to enable the apparatus to perform the communication method according to any one of claims 1 to 7 or 8 to 10.

14. A computer-readable storage medium, wherein the computer-readable storage medium stores a computer program; and when the computer program is executed by a computer, the communication method according to any one of claims 1 to 7 or 8 to 10 is implemented.

15. A communication system, comprising: a multicast session management network element, and an application server, wherein
the multicast session management network element is configured to perform the communication method according to any one of claims 1 to 7;
the application server is configured to perform the communication method according to any one of claims 8 to 10.

## Patentansprüche

1. Kommunikationsverfahren, umfassend:
Empfangen (S210) von ersten Informationen eines ersten Multicast-Dienstes von einem Anwendungsserver durch ein Multicast-Sitzungsverwaltungsnetzwerkelement, wobei die ersten Informationen mindestens eines der folgenden Elemente anzeigen: einen ersten Dienstbereich des ersten Multicast-Dienstes oder den ersten Multicast-Dienst; und
Senden (S220) einer zweiten Dienstbereichskennung des ersten Multicast-Dienstes durch das Multicast-Sitzungsverwaltungsnetzwerkelement an den Anwendungsserver basierend auf den ersten Informationen, wobei die zweite Dienstbereichskennung einen zweiten Dienstbereich identifiziert, wobei das Senden Folgendes umfasst: Bestimmen der zweiten Dienstbereichskennung entsprechend den ersten Informationen durch das Multicast-Sitzungsverwaltungsnetzwerkelement; und Senden der zweiten Dienstbereichskennung durch das Multicast-Sitzungsverwaltungsnetzwerkelement an den Anwendungsserver,
wobei das Verfahren ferner Folgendes umfasst:
Empfangen einer Sitzungserstellungsanforderungsnachricht von dem Anwendungsserver durch das Multicast-Sitzungsverwaltungsnetzwerkelement; und
Benachrichtigen einer ersten Netzwerkvorrichtung der zweiten Dienstbereichskennung durch das Multicast-Sitzungsverwaltungsnetzwerkelement basierend auf der Sitzungserstellungsanforderungsnachricht.

2. Kommunikationsverfahren nach Anspruch 1, wobei die ersten Informationen eine Kennung des ersten Multicast-Dienstes umfassen.

3. Kommunikationsverfahren nach Anspruch 1 oder 2, wobei die zweite Dienstbereichskennung eine Multimedia-Broadcast/Multicast-Dienstbereichskennung, MBMS SAI, umfasst.

4. Kommunikationsverfahren nach einem der Ansprüche 1 bis 3, wobei die ersten Informationen eine Kennung des ersten Dienstbereichs umfasst, und die Kennung des ersten Dienstbereichs eine oder mehrere Zellenkennungen umfasst, oder die Kennung des ersten Dienstbereichs aus einem oder mehreren Trackingbereichen, TAs, besteht.

5. Kommunikationsverfahren nach einem der Ansprüche 1 bis 4, wobei die ersten Informationen in einer temporären Multicast-Gruppenidentifizierungs-Zuordnungsanforderungsnachricht übertragen werden, und wobei die zweite Dienstbereichskennung in einer Antwortnachricht der temporären Multicast-Gruppenidentifizierungs-Zuordnungsanforderungsnachricht enthalten ist.

6. Kommunikationsverfahren nach einem der Ansprüche 1 bis 5, wobei das Verfahren ferner Folgendes umfasst:
Senden von zweiten Informationen des ersten Multicast-Dienstes durch das Multicast-Sitzungsverwaltungsnetzwerkelement an den Anwendungsserver, wobei die zweiten Informationen mindestens eines der folgenden Elemente anzeigen: eine Frequenz des ersten Multicast-Dienstes oder eine temporäre Multicast-Gruppenkennung des ersten Multicast-Dienstes.

7. Kommunikationsverfahren nach einem der Ansprüche 1 bis 6, wobei das Benachrichtigen einer ersten Netzwerkvorrichtung der zweiten Dienstbereichskennung Folgendes umfasst: Benachrichtigen der ersten Netzwerkvorrichtung der zweiten Dienstbereichskennung durch das Multicast-Sitzungsverwaltungsnetzwerkelement über eine Zugangs- und Mobilitätsverwaltungsfunktion, und wobei die erste Netzwerkvorrichtung dazu konfiguriert ist, die zweite Dienstbereichskennung zu übertragen.

8. Kommunikationsverfahren, umfassend:
Senden (S210) von ersten Informationen eines ersten Multicast-Dienstes durch einen Anwendungsserver an ein Multicast-Sitzungsverwaltungsnetzwerkelement, wobei die ersten Informationen mindestens eines der folgenden Elemente anzeigen: einen ersten Dienstbereich des ersten Multicast-Dienstes oder den ersten Multicast-Dienst;
Empfangen (S220) einer zweiten Dienstbereichskennung des ersten Multicast-Dienstes aus dem Multicast-Sitzungsverwaltungsnetzwerkelement durch den Anwendungsserver, wobei die zweite Dienstbereichskennung den ersten Informationen entspricht und einen zweiten Dienstbereich identifiziert;
Senden einer Sitzungserstellungsanforderungsnachricht durch den Anwendungsserver an das Multicast-Sitzungsverwaltungsnetzwerkelement, damit das Multicast-Sitzungsverwaltungsnetzwerkelement eine erste Netzwerkvorrichtung der zweiten Dienstbereichskennung basierend auf der Sitzungserstellungsanforderungsnachricht benachrichtigt; und
Benachrichtigen (S230) einer Endgerätevorrichtung der zweiten Dienstbereichskennung durch den Anwendungsserver.

9. Kommunikationsverfahren nach Anspruch 8, wobei das Verfahren ferner Folgendes umfasst:
Empfangen von zweiten Informationen des ersten Multicast-Dienstes aus dem Multicast-Sitzungsverwaltungsnetzwerkelement durch den Anwendungsserver, wobei die zweiten Informationen mindestens eines der folgenden Elemente anzeigen: eine Frequenz des ersten Multicast-Dienstes oder eine temporäre Multicast-Gruppenkennung des ersten Multicast-Dienstes.

10. Kommunikationsverfahren nach Anspruch 8 oder 9, wobei das Benachrichtigen einer Endgerätevorrichtung der zweiten Dienstbereichskennung durch den Anwendungsserver Folgendes umfasst:
Benachrichtigen der Endgerätevorrichtung der zweiten Dienstbereichskennung, die in einer Dienstankündigungsnachricht enthalten ist, durch den Anwendungsserver.

11. Kommunikationsverfahren nach einem der Ansprüche 1 bis 10, ferner umfassend:
Empfangen (S270) der zweiten Dienstbereichskennung des ersten Multicast-Dienstes durch die Netzwerkvorrichtung; und
Übertragen (S290) der zweiten Dienstbereichskennung durch die Netzwerkvorrichtung.

12. Kommunikationsverfahren nach Anspruch 11, wobei das Verfahren ferner Folgendes umfasst:
Empfangen von zweiten Informationen des ersten Multicast-Dienstes durch die Netzwerkvorrichtung; und
Übertragen der zweiten Informationen durch die Netzwerkvorrichtung, wobei
die zweiten Informationen eine temporäre Multicast-Gruppenkennung des ersten Multicast-Dienstes umfassen.

13. Kommunikationseinrichtung, umfassend:
einen Prozessor, der dazu konfiguriert ist, in einem Speicher gespeicherte Computeranweisungen auszuführen, um die Einrichtung in die Lage zu versetzen, das Kommunikationsverfahren nach einem der Ansprüche 1 bis 7 oder 8 bis 10 durchzuführen.

14. Computerlesbares Speichermedium, wobei das computerlesbare Speichermedium ein Computerprogramm speichert; und, wenn das Computerprogramm durch einen Computer ausgeführt wird, das Kommunikationsverfahren nach einem der Ansprüche 1 bis 7 oder 8 bis 10 implementiert wird.

15. Kommunikationssystem, umfassend: ein Multicast-Sitzungsverwaltungsnetzwerkelement und einen Anwendungsserver, wobei
das Multicast-Sitzungsverwaltungsnetzwerkelement dazu konfiguriert ist, das Kommunikationsverfahren nach einem der Ansprüche 1 bis 7 durchzuführen;
der Anwendungsserver dazu konfiguriert ist, das Kommunikationsverfahren nach einem der Ansprüche 8 bis 10 durchzuführen.

## Revendications

1. Procédé de communication comprenant :
la réception (S210), par un élément de réseau de gestion de session multidiffusion, des premières informations d'un premier service multidiffusion provenant d'un serveur d'application, dans lequel les premières informations indiquent au moins l'un : d'une première zone de service du premier service multidiffusion ou du premier service multidiffusion ; et
l'envoi (S220), par l'élément de réseau de gestion de session multidiffusion, d'un second identifiant de zone de service du premier service multidiffusion au serveur d'application, sur la base des premières informations, dans lequel le second identifiant de zone de service identifie une seconde zone de service, dans lequel l'envoi comprend : la détermination, par l'élément de réseau de gestion de session multidiffusion, du second identifiant de zone de service correspondant aux premières informations ; et l'envoi, par l'élément de réseau de gestion de session multidiffusion, du second identifiant de zone de service au serveur d'application,
dans lequel le procédé comprend en outre :
la réception, par l'élément de réseau de gestion de session multidiffusion, d'un message de demande de création de session provenant du serveur d'application ; et
la notification, par l'élément de réseau de gestion de session multidiffusion, d'un premier dispositif réseau du second identifiant de zone de service sur la base du message de demande de création de session.

2. Procédé de communication selon la revendication 1, dans lequel les premières informations comprennent un identifiant du premier service multidiffusion.

3. Procédé de communication selon la revendication 1 ou 2, dans lequel le second identifiant de zone de service comprend un identifiant de zone de service de diffusion/multidiffusion multimédia, MBMS SAI.

4. Procédé de communication selon l'une quelconque des revendications 1 à 3, dans lequel les premières informations comprennent un identifiant de la première zone de service, et l'identifiant de la première zone de service comprenant un ou plusieurs identifiants de cellule, ou l'identifiant de la première zone de service est constitué d'une ou de plusieurs zones de suivi, TA.

5. Procédé de communication selon l'une quelconque des revendications 1 à 4, dans lequel les premières informations sont transportées dans un message de demande d'attribution d'identifiant de groupe multidiffusion temporaire, et dans lequel le second identifiant de zone de service est transporté dans un message de réponse au message de demande d'attribution d'identifiant de groupe multidiffusion temporaire.

6. Procédé de communication selon l'une quelconque des revendications 1 à 5, dans lequel le procédé comprend en outre : l'envoi, par l'élément de réseau de gestion de session multidiffusion, des secondes informations du premier service multidiffusion au serveur d'application, dans lequel les secondes informations comprennent au moins l'un : d'une fréquence du premier service multidiffusion ou d'un identifiant de groupe multidiffusion temporaire du premier service multidiffusion.

7. Procédé de communication selon l'une quelconque des revendications 1 à 6, dans lequel la notification d'un premier dispositif réseau du second identifiant de zone de service comprend : la notification, par l'élément de réseau de gestion de session multidiffusion, du premier dispositif réseau du second identifiant de zone de service par le biais d'une fonction de gestion d'accès et de mobilité, et dans lequel le premier dispositif réseau est configuré pour diffuser le second identifiant de zone de service.

8. Procédé de communication, comprenant :
l'envoi (S210), par un serveur d'application, des premières informations d'un premier service multidiffusion à un élément de réseau de gestion de session multidiffusion, dans lequel les premières informations indiquent au moins l'un : d'une première zone de service du premier service multidiffusion ou du premier service multidiffusion ;
la réception (S220), par le serveur d'application, d'un second identifiant de zone de service du premier service multidiffusion de l'élément de réseau de gestion de session multidiffusion, dans lequel le second identifiant de zone de service correspond aux premières informations et identifie une seconde zone de service ;
l'envoi, par le serveur d'application, d'un message de demande de création de session à l'élément de réseau de gestion de session multidiffusion afin que l'élément de réseau de gestion de session multidiffusion notifie un premier dispositif réseau du second identifiant de zone de service sur la base du message de demande de création de session ; et
la notification (S230), par le serveur d'application, d'un dispositif terminal du second identifiant de zone de service.

9. Procédé de communication selon la revendication 8, dans lequel le procédé comprend en outre :
la réception, par le serveur d'application, des secondes informations du premier service multidiffusion à partir de l'élément de réseau de gestion de session multidiffusion, dans lequel les secondes informations comprennent au moins l'un : d'une fréquence du premier service multidiffusion ou d'un identifiant de groupe multidiffusion temporaire du premier service multidiffusion.

10. Procédé de communication selon la revendication 8 ou 9, dans lequel la notification, par le serveur d'application, d'un dispositif terminal du second identifiant de zone de service comprend :
la notification, par le serveur d'application, du dispositif terminal du second identifiant de zone de service qui est transporté dans un message d'annonce de service.

11. Procédé de communication selon l'une quelconque des revendications 1 à 10, comprenant en outre :
la réception (S270), par le dispositif réseau, du second identifiant de zone de service du premier service multidiffusion ; et
la diffusion (S290), par le dispositif réseau, du second identifiant de zone de service.

12. Procédé de communication selon la revendication 11, dans lequel le procédé comprend en outre :
la réception, par le dispositif réseau, des secondes informations du premier service multidiffusion ; et
la diffusion, par le dispositif réseau, des secondes informations, dans lequel
les secondes informations comprennent un identifiant de groupe multidiffusion temporaire du premier service multidiffusion.

13. Appareil de communication, comprenant :
un processeur, configuré pour exécuter des instructions informatiques stockées dans une mémoire, pour permettre à l'appareil de réaliser le procédé de communication selon l'une quelconque des revendications 1 à 7 ou 8 à 10.

14. Support de stockage lisible par ordinateur, dans lequel le support de stockage lisible par ordinateur stocke un programme informatique ; et lorsque le programme informatique est exécuté par un ordinateur, le procédé de communication selon l'une quelconque des revendications 1 à 7 ou 8 à 10 est mis en œuvre.

15. Système de communication, comprenant : un élément de réseau de gestion de session multidiffusion et un serveur d'application, dans lequel
l'élément de réseau de gestion de session multidiffusion est configuré pour réaliser le procédé de communication selon l'une quelconque des revendications 1 à 7 ;
le serveur d'application est configuré pour réaliser le procédé de communication selon l'une quelconque des revendications 8 à 10.
